**Europäisches Patentamt**

**European Patent Office**

**Office européen des brevets**

(11) Veröffentlichungsnummer: **0 341 447 B1**

## (12) EUROPÄISCHE PATENTSCHRIFT

(45) Veröffentlichungstag der Patentschrift: **30.12.92**

(21) Anmeldenummer: **89106764.7**

(22) Anmeldetag: **15.04.89**

(51) Int. Cl.⁵: **G01M 9/00**, G01L 15/00

54 **Vorrichtung zur Bestimmung von Seitenwindeinflüssen an Fahrzeugen.**

(30) Priorität: **11.05.88 DE 3816057**

(43) Veröffentlichungstag der Anmeldung:
**15.11.89 Patentblatt 89/46**

(45) Bekanntmachung des Hinweises auf die
Patenterteilung:
**30.12.92 Patentblatt 92/53**

(84) Benannte Vertragsstaaten:
**ES FR GB**

(56) Entgegenhaltungen:
**EP-A- 0 076 752       EP-A- 0 168 720**
**EP-A- 0 261 587       EP-A- 0 315 497**
**DE-A- 2 819 122       DE-A- 3 612 599**
**DE-C- 3 500 988       US-A- 4 610 213**

**PATENT ABSTRACTS OF JAPAN vol. 13, no. 80 (P-832)(3428), 23. Februar 1989; & JP - A - 63262542 (MITSUBISHI MOTORS CORP.) 28.10.1988**

(73) Patentinhaber: **DAIMLER-BENZ AKTIENGE-SELLSCHAFT**
**Mercedesstrasse 136**
**W-7000 Stuttgart 60(DE)**

(72) Erfinder: **Van Tuan Tran, Dr.**
**Fasanenhofstrasse 17**
**W-7000 Stuttgart 80(DE)**

## Beschreibung

Die Erfindung betrifft eine Vorrichtung zur Bestimmung von Seitenwindeinflüssen an Fahrzeugen, insbesondere Kraftfahrzeugen od.dgl., mit mehreren Drucksonden, welche symmetrisch zur vertikalen Mittellängsebene des Fahrzeuges sowie in Längsrichtung desselben voneinander beabstandet angeordnet und mit der Eingangsseite eines die Druckmeßwerte auswertenden Rechners verbunden sind.

Aus der DE-PS 11 09 091 ist es bekannt, an zwei gegenüberliegenden Seiten eines Fahrzeuges je einen Druckaufnehmer für den vom Seitenwind beeinflußten Luftdruck anzuordnen, wobei jeder Druckaufnehmer mit einem auf den Differenzdruck ansprechenden Stellorgan verbunden ist, welches gegen den Seitenwind gerichtete Lenkbewegungen des Fahrzeuges steuert.

Diese Anordnung berücksichtigt zwar die Erkenntnis, daß aufgrund von Seitenwind Druckunterschiede zwischen den Fahrzeugseiten auftreten. Jedoch hat es sich in der Praxis als nicht möglich erwiesen, die Lenkung zur Kompensation der Seitenwindeinflüsse allein in Abhängigkeit von diesen Druckunterschieden zu betätigen.

In der Druckschrift "ISATA-Proc. 87057 (1987) 16th Int. Symposium on Automotive Technol. and Automation (Florenz 1987), Proc. Vol.2", S. 233 - 243, wird beschrieben, wie Windeinflüsse auf ein Kraftfahrzeug unmittelbar bei Versuchsfahrten ermittelt werden können. Dazu ist an den beiden Fahrzeuglängsseiten sowie an der Fahrzeugfrontseite und der Fahrzeugheckseite eine Vielzahl von Druckmeßwandlern angeordnet, um an den jeweiligen Meßstellen den Luftdruck auch während der Fahrt des Fahrzeuges feststellen zu können. Mittels eines Rechners, welcher die Meßwerte auswertet, können dann die auf das Fahrzeug einwirkenden aerodynamischen Kräfte ermittelt werden. Insbesondere läßt sich bestimmen, wie groß die Momente, die das Fahrzeug im Sinne einer Nickbewegung oder Wankbewegung zu beeinflussen suchen, sowie die Seitenkraft sind, die das Fahrzeug bei Seitenwind seitwärts zu drücken sucht.

Diese bekannte Anordnung dient vor allem dazu, die aerodynamischen Eigenschaften von Kraftfahrzeug-Karosserien bei Versuchsfahrten auf einem Testgelände zu ermitteln. Auf diese Weise sollen Versuche mit Modellen der Kraftfahrzeug-Karosserie in Windkanälen ergänzt bzw. erübrigt werden.

Hinweise darauf, wie dem Fahrer eines Kraftfahrzeuges während der Fahrt Angaben über die Windgeschwindigkeit und/oder Windrichtung gegeben werden könnten, werden in dieser Druckschrift nicht gegeben.

Aufgabe der Erfindung ist es nun, eine Vorrichtung zu schaffen, welche bei vergleichsweise geringem konstruktiven Aufwand die Möglichkeit bietet, sowohl eine Information über die Windgeschwindigkeit als auch über die Windrichtung zu ermitteln.

Diese Aufgabe wird erfindungsgemäß dadurch gelöst, daß der Rechner

- ein die Windrichtung relativ zum Fahrzeug wiedergebendes Signal erzeugt, indem der Quotient aus der Differenz der Signale einer ersten Sonde auf der einen Fahrzeugseite und einer zweiten dazu unsymmetrisch angeordneten Sonde auf der anderen Fahrzeugseite sowie der Differenz der Signale der zu den beiden vorgenannten Sonden symmetrisch angeordneten Sonden gebildet wird, und

- ein den Staudruck wiedergebendes Signal erzeugt, indem die Differenz der Signale zweier auf unterschiedlichen Fahrzeugseiten unsymmetrisch zueinander angeordneter Sonden mit einem vorgegebenen bzw. vorgebbaren, von dem die Windrichtung wiedergebenden Signal abhängigem Faktor multiplikativ verknüpft wird.

Die Erfindung nutzt bei der Bestimmung der Windrichtung die Tatsache, daß ein (in üblicher Weise symmetrisch zur vertikalen Mittellängsebene geformtes) Fahrzeug bei vorhandenem Seitenwind unsymmetrisch zur vertikalen Mittellängsebene umströmt wird. Gleichzeitig wird die überraschende Erkenntnis ausgenutzt, daß diese Unsymmetrie und damit der Einfallwinkel des Seitenwindes relativ zum Fahrzeug mit wenigen Sonden hinreichend genau bestimmt werden kann, die in der angegebenen Weise angeordnet sind.

Des weiteren wird bei der Bestimmung des Staudruckes, d.h. einer wesentlichen und überwiegend nur von der Windgeschwindigkeit abhängigen Größe des Seitenwindes die überraschende Tatsache ausgenutzt, daß eine Ermittlung aus einer mittels zweier Drucksonden meßbaren Druckdifferenz möglich ist, wenn allein mit dem Einfallwinkel des Seitenwindes relativ zum Fahrzeug korrelierte Korrekturfaktoren bekannt sind, welche für das jeweilige Fahrzeug durch Windkanalversuche bestimmt werden können.

In Abhängigkeit von dem Einfallwinkel sowie dem Staudruck des Seitenwindes kann der Rechner gegebenenfalls eine Lenkung oder auch aerodynamische Hilfsmittel od.dgl. des Fahrzeuges beeinflussen, um den Einfluß des Seitenwindes zu kompensieren bzw. für den Fahrer leichter beherrschbar zu machen.

Dabei ist vorteilhaft, daß auf den Seitenwind außerordentlich schnell reagiert werden kann, weil die Störgröße, d.h. der Einfallwinkel sowie der Staudruck des Seitenwindes, im Wege einer sogenannten Störgrößenaufschaltung berücksichtigt werden kann. Dadurch wird ein besonders ruhiges Fahrverhalten gewährleistet. Grundsätzlich ist es zwar auch möglich, Seitenwindeinwirkungen im Wege einer Störgrößenausregelung zu vermindern, wobei beispielsweise Giergeschwindigkeitssensoren im Fahrzeug verwendet werden, um dessen Drehung um die Fahrzeughochachse zu registrieren. Stimmen dann Lenkeinschlag und Fahrzeugreaktion nicht überein, so wird von einem Regelungssystem in die Lenkung, gegebenenfalls in eine Hinterradlenkung, eingegriffen, um die Abweichung zu minimieren. Dabei müssen jedoch im Gegensatz zu dem erfindungsgemäßen System aufgrund des Seitenwindes zunächst Kursabweichungen erfolgen, bevor eine Korrektur wirksam werden kann. Die Erfindung dagegen gestattet eine vorausschauende Korrektur.

Gemäß einer bevorzugten Ausführungsform der Erfindung sind die Drucksonden jeweils unter der Außenhaut des Fahrzeuges an einer nach außen führenden Öffnung bzw. Bohrung angeordnet, deren Durchmesser bzw. Querschnitt recht gering sein kann. Beispielsweise genügen Bohrungen mit einem Durchmesser von 3 mm.

Im Hinblick auf eine hohe Meßgenauigkeit ist es äußerst zweckmäßig, wenn die Drucksonden - z.B. über Rohr- bzw. Schlauchleitungen od.dgl. - jeweils an einen gemeinsamen Referenzraum angeschlossen sind und Signale erzeugen, die von der Druckdifferenz zwischen der Umgebung der Sonde und dem Referenzraum abhängen. Somit stellt jede Drucksonde praktisch einen Differenzdruckmesser dar. Eine derartige Anordnung ist möglich, weil bei dem erfindungsgemäßen System zur Bestimmung des Einfallwinkels sowie des Staudruckes jeweils nur Differenzen zwischen den von jeweils zwei Drucksonden gemessenen Druckwerten bzw. den von zwei Drucksonden abgegebenen Signalen als wesentliche Größen gemessen bzw. bestimmt werden müssen. Damit hat das Druckniveau im Referenzraum keinerlei Einfluß auf die Genauigkeit des Systems. Der Druck im Referenzraum darf sogar zeitlich schwanken. Jedoch sollen schnelle Druckschwankungen im Referenzraum vermieden werden, weil dadurch in den Verbindungsleitungen zwischen den Drucksonden und dem Referenzraum Turbulenzen oder Druckwellen entstehen können, die an verschiedenen Drucksonden zu unterschiedlichen Zeiten wirksam werden und damit die zu bestimmenden Größen verfälschen. Aus diesem Grunde ist es in der Regel zweckmäßig, den Referenzraum über eine Drosselstrecke mit der Atmosphäre zu verbinden, um die Schnelligkeit von Druckänderungen im Referenzraum zu vermindern.

Im übrigen kann beispielsweise bei Kraftfahrzeugen ein Karosseriehohlraum als Referenzraum mit den Drucksonden verbunden sein.

Im Hinblick auf eine hohe Meßgenauigkeit ist des weiteren vorteilhaft, wenn die Drucksonden so angeordnet sind, daß die Signale jeder Sonde bei Wind in Längsrichtung des Fahrzeuges betragsmäßig groß und annähernd proportional zum Staudruck sind und bei gleichbleibender Windgeschwindigkeit - zumindest in einem Winkelbereich der Windrichtungen - deutlich von der Windrichtung abhängen. Die in dieser Hinsicht optimale Lage der Drucksonden kann durch Windkanalversuche ermittelt werden.

Um Windeinfallrichtungen berücksichtigen zu können, die mit der Fahrzeuglängsachse einen in Fahrtrichtung geöffneten Winkel von bis zu 75° bilden, genügt es, zwei frontseitige sowie zwei seitliche Drucksonden am Fahrzeug anzuordnen. Falls beliebige Einfallrichtungen berücksichtigt werden sollen, müssen zwei weitere seitliche Drucksonden vorgesehen werden. Dabei ist zweckmäßig, daß die weiteren seitlichen Drucksonden im Falle eines Personenkraftwagens etwa an der seitlichen Fahrzeugmitte und die zuvor genannten seitlichen Drucksonden nahe der vorderen Fahrzeugecken angeordnet sind. Auch für die frontseitigen Drucksonden ist in der Regel eine eckennahe Anordnung vorteilhaft.

Auch wenn insgesamt sechs Drucksonden vorhanden sind, so werden für zusammengehörige Werte von Windeinfallwinkel und Staudruck jeweils nur vier Drucksonden benötigt. Damit der Rechner jeweils die "richtigen" Drucksonden berücksichtigt, ist bevorzugt vorgesehen, daß die Signale der beiden symmetrisch angeordneten frontseitigen sowie zweier symmetrisch angeordneter seitlicher Sonden verarbeitet werden, wenn die Differenz zwischen dem Signal der frontseitigen Sonde auf der einen Fahrzeugseite und dem Signal der anderen frontseitigen Sonde gleiches Vorzeichen wie die Differenz zwischen dem Signal der einen seitlichen Sonde auf der einen Fahrzeugseite und dem Signal der dazu symmetrisch angeordneten seitlichen Sonde hat. Falls die beiden Differenzen entgegengesetztes Vorzeichen haben, so werden die Signale der vier seitlichen Sonden verwertet.

Im übrigen wird hinsichtlich bevorzugter Merkmale der Erfindung auf die Ansprüche sowie die nachfolgend anhand der Zeichnung näher erläuterten bevorzugten Ausführungsformen verwiesen.

Dabei zeigt

Fig. 1    eine schematisierte Draufsicht auf einen Personenkraftwagen mit einer erfindungsgemäßen Vorrichtung zur Bestimmung von Seitenwindeinflüssen,

Fig. 2    ein Diagramm, welches den Einfallwinkel $\beta$ des Seitenwindes relativ zum Fahrzeug in Abhängigkeit von einem Differenzenquotienten $D_{1423}$ wiedergibt, welcher aus den Signalen der Drucksonden ermittelbar ist, und

Fig. 3     ein Diagramm, welches zur Berechnung des Staudruckes dienende Koeffizienten $c_{23}$ in Abhängigkeit vom Einfallwinkel $\beta$ wiedergibt.

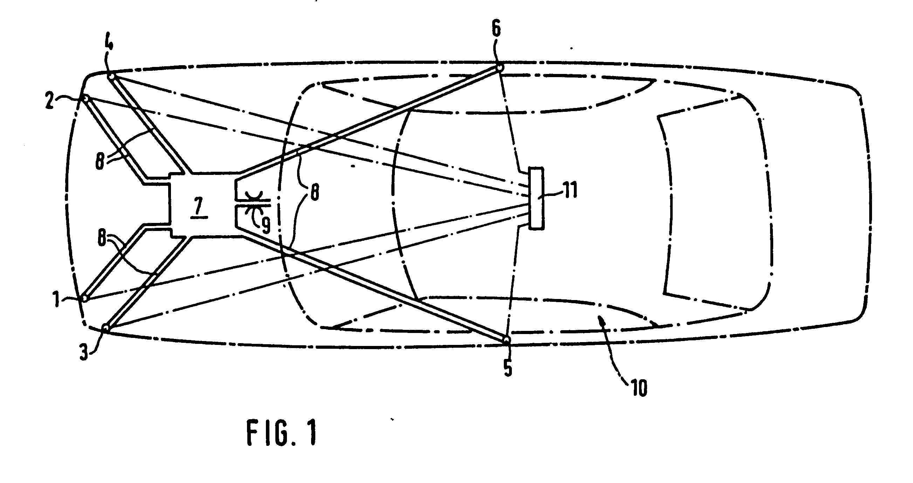

An den in Fig. 1 dargestellten Personenkraftwagen 10 sind symmetrisch zur vertikalen Mittellängsebene zwei frontseitige Drucksonden 1 und 2 sowie zwei bzw. - vorzugsweise - vier ebenfalls zur vertikalen Mittellängsebene symmetrische seitliche Drucksonden 3 bis 6 angeordnet. Dabei befinden sich die seitlichen Drucksonden 3 und 4 ebenso wie die frontseitigen Drucksonden 1 und 2 nahe der vorderen Karosserie-Ecken. Die Drucksonden 5 und 6 sind etwa in Fahrzeugmitte, beispielsweise nahe der B-Säule angeordnet, die zwischen den vorderen und hinteren Seitentüren untergebracht ist.

Alle Drucksonden sind unter der Außenhaut des Fahrzeuges jeweils hinter einer kleinen Öffnung untergebracht, deren Durchmesser größenordnungsmäßig bei 3 mm liegt. Jede der Drucksonden 1 bis 6 ist als Differenzdruckmesser ausgebildet, welcher jeweils auf die Druckdifferenz zwischen dem Druck an der Außenhaut des Fahrzeuges 10 und dem Druck in einem Referenzraum 7 reagiert, der mit den Drucksonden 1 bis 6 über Rohr- bzw. Schlauchleitungen 8 verbunden ist. Als Referenzraum 7 kann praktisch jeder Hohlraum der Fahrzeugkarosserie dienen, da der Druck im Referenzraum keineswegs konstant bleiben muß. Es muß lediglich gewährleistet sein, daß im Referenzraum 7 keine schnellen Druckschwankungen auftreten können, welche aufgrund von Turbulenzen oder Druckwellen bewirken könnten, daß die referenzraumseitigen Druckschwankungen an den Drucksonden 1 bis 6 zu unterschiedlichen Zeiten wirksam werden. Um zeitlich langsame Druckschwankungen sicherzustellen, kann der Referenzraum 7 mit der Atmosphäre über eine Drosselstrecke 9 verbunden sein.

Die Signalausgänge der Drucksonden 1 bis 6 sind mit der Eingangsseite eines Rechners 11 des Fahrzeuges 10 verbunden, welcher seinerseits in Abhängigkeit der mittels der Drucksonden 1 bis 6 feststellbaren Seitenwindeinflüsse Lenkkorrekturen des Fahrzeuges bzw. aerodynamische Hilfen zur Kompensation der Seitenwindeinflüsse steuern kann. Beispielsweise ist es bei Fahrzeugen mit zusätzlicher Hinterradlenkung möglich, daß der Rechner zur Kompensation der Seitenwindeinflüsse Stellorgane der Hinterradlenkung steuert.

Die erfindungsgemäße Vorrichtung arbeitet wie folgt:
Falls das Fahrzeug nur die Drucksonden 1 bis 4 besitzt, können nur solche Seitenwinde erfaßt werden, die von schräg vorn auf das Fahrzeug einwirken und relativ zur Fahrzeuglängsachse unter einem Winkel von bis zu etwa -75°(von rechts) oder bis zu +75° (von links) einfallen.

Falls dagegen alle sechs Drucksonden 1 bis 6 vorhanden ist, können Seitenwinde aus beliebigen Richtungen erfaßt werden, d.h. die Einfallsrichtung kann mit der Fahrzeuglängsachse einen Winkel bis zu +180° bzw. bis zu -180° bilden.

Nachfolgend wird nun die Funktion bei insgesamt sechs Drucksonden beschrieben. Soweit dabei auf die Meßwerte der Drucksonden 5 und 6 zurückgegriffen wird, handelt es sich um Funktionen, die von einem System mit nur vier Drucksonden 1 bis 4 nicht ausgeführt werden können, d.h. ein derartiges System könnte den jeweiligen Seitenwindeinfluß nicht ermitteln, da der Meßbereich überschritten wird.

Zunächst werden die Signale $p_1$ bis $p_6$ der Drucksonden 1 bis 6 vom Rechner 11 erfaßt.

Sodann bestimmt der Rechner 11 die Druckdifferenzen $p_{12} = p_1 - p_2$, $p_{34} = p_3 - p_4$, $p_{14} = p_1 - p_4$, $p_{23} = p_2 - p_3$ und $p_{56} = p_5 - p_6$.

Sodann wird überprüft, ob die Druckdifferenz $p_{56}$ und/oder die Druckdifferenz $p_{34}$ positiv oder negativ sind. Falls diese Druckdifferenzen einen positiven Wert haben, ist das Vorzeichen des Einfallwinkels positiv, d.h. der Seitenwind fällt, in Fahrtrichtung des Fahrzeuges gesehen, von links ein. Bei negativem Vorzeichen gilt Entsprechendes, d.h. der Seitenwind fällt von rechts ein.

Danach wird überprüft, ob die Druckdifferenz $p_{12}$ gleiches Vorzeichen wie die Druckdifferenz $p_{34}$ und/oder die Druckdifferenz $p_{56}$ hat. Liegen gleiche Vorzeichen vor, so liegt der Einfallwinkel zwischen ca. -75° und +75°. Bei ungleichen Vorzeichen hat der Einfallwinkel Werte zwischen +75° und +180° bzw. zwischen -75° und -180°.

Falls der Einfallwinkel zwischen 0 und +75° liegt, bestimmt der Rechner 11 den Differenzenquotienten $D_{2314} = p_{23}/p_{14}$.

Falls der Einfallwinkel zwischen 0 und -75° liegt, bestimmt der Rechner 11 den Differenzenquotienten $D_{1423} = p_{14}/p_{23}$.

Falls der Einfallswinkel zwischen +75° und +180° liegt, bestimmt der Rechner 11 den Differenzenquotienten $D_{3456} = p_{34}/p_{56}$.

Falls der Einfallswinkel zwischen -75° und -180° liegt, bestimmt der Rechner 11 ebenfalls den Wert $D_{3456} = p_{34}/p_{56}$.

Im vorliegenden Falle möge nun der Einfallswinkel zwischen 0 und -75° gelegen haben, so daß der Rechner 11 den Differenzenquotienten $D_{1423}$ bestimmt hat.

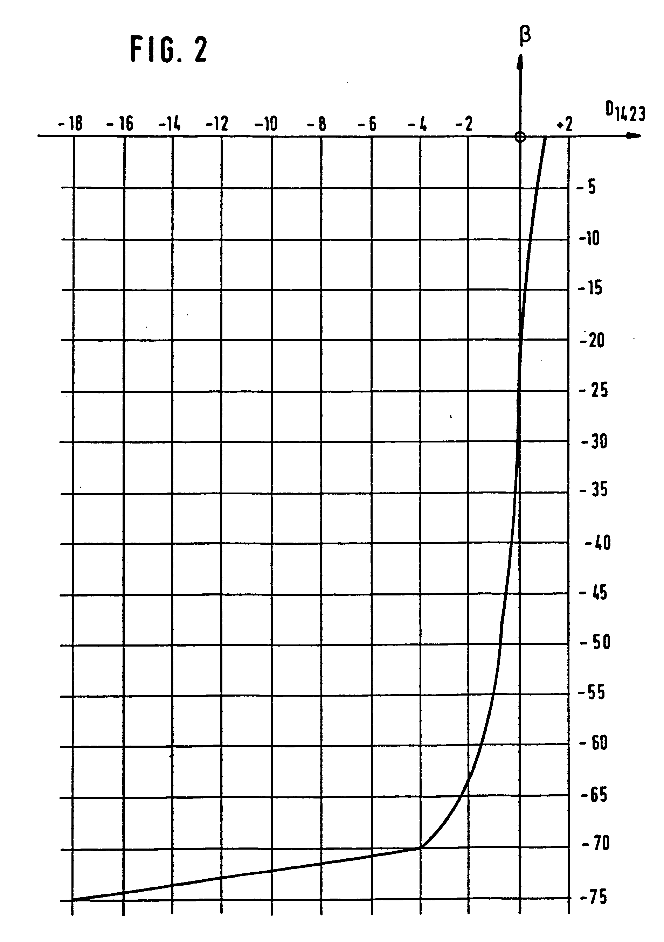

Im Rechner 11 ist eine Tabelle od.dgl. gespeichert, die es dem Rechner 11 ermöglicht, jedem möglichen Wert von $D_{1423}$ einen Einfallwinkel zuzuordnen. Diese Tabelle ist in Fig. 2 als Diagramm dargestellt, wobei auf der Abszisse die möglichen Werte von $D_{1423}$ und auf der Ordinate die zugehörigen Werte des Einfallwinkels aufgetragen sind. Aufgrund der oben beschriebenen Anordnung der Drucksonden 1 bis 6 bzw. 1 bis 4 besitzt die die Zuordnung zwischen den Einfallwinkeln und den Werten von $D_{1423}$ wiedergebende Kurve eine monotone Steigung, so daß umkehrbare Eindeutigkeit gegeben ist.

Somit hat der Rechner 11 bereits den Einfallswinkel ermittelt.

Falls der Einfallwinkel des Seitenwindes in einem anderen Sektor liegen sollte, wird der jeweilige Wert des Einfallwinkels in völlig analoger Weise bestimmt, indem aufgrund weiterer im Rechner gespeicherter Tabellen den jeweiligen Werten von $D_{2314}$, $D_{3456}$ usw. die jeweiligen Werte des Einfallwinkels zugeordnet werden.

Im folgenden wird nun zunächst wiederum davon ausgegangen, daß der Einfallwinkel zwischen 0 und -75° liegen möge. In diesem Fall kann der Staudruck q durch Multiplikation des Wertes der Druckdifferenz $p_{23}$ mit einem Beiwert $1/c_{23}$ bestimmt werden.

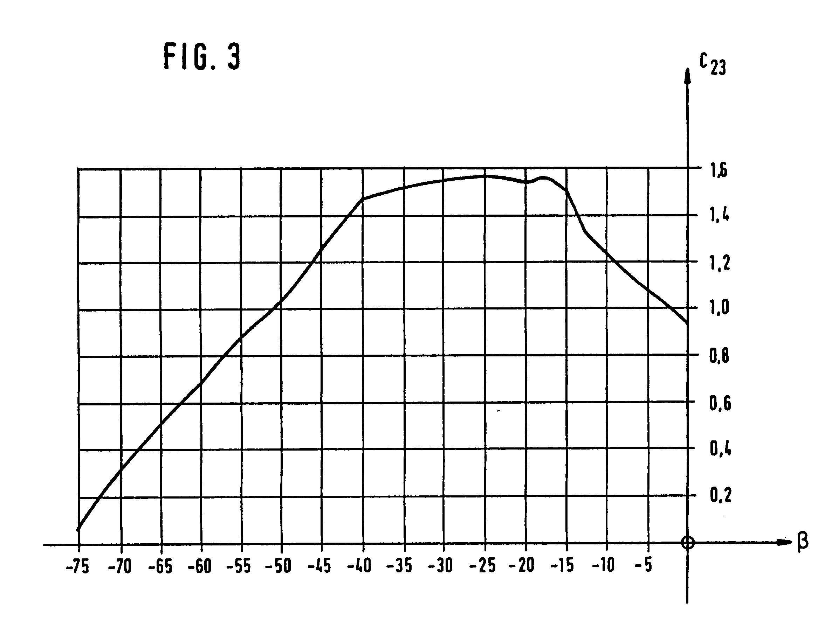

Die Werte von $c_{23}$ hängen lediglich vom Wert des jeweiligen Einfallwinkels (Wertebereich hier zwischen 0 und -75°) bzw. den zugeordneten Werten von $D_{1423}$ ab. Dies ist in Fig. 3 grafisch dargestellt. Jedem möglichen Wert des Anströmwinkels kann also in eindeutiger Weise ein Wert von $c_{23}$ zugeordnet werden, so daß der Rechner den jeweiligen Staudruck q ermitteln kann.

Grundsätzlich Gleiches gilt, wenn der Einfallwinkels in anderen Sektoren liegt. Falls beispielsweise der Einfallwinkel zwischen 0 und +75° liegt, so wird der Staudruck q durch Multiplikation der Druckdifferenz $p_{14}$ mit dem Beiwert $1/c_{14}$ bestimmt, wobei $c_{14}$ wiederum aufgrund des vorher ermittelten Wertes des Einfallwinkels bzw. des Differenzenquotienten $D_{2314}$ aus einer Tabelle entnommen werden kann.

Falls der Einfallwinkel zwischen +75° und +180° liegt, wird der Staudruck q durch Multiplikation der Druckdifferenz $p_{56}$ mit dem Beiwert $1/c_{56}$ berechnet, wobei $c_{56}$ wiederum aus einer Tabelle in Abhängigkeit vom vorher ermittelten Wert des Einfallwinkels bzw. des Differenzenquotienten $D_{3456}$ entnommen werden kann.

Wenn schließlich der Einfallwinkel zwischen -75° und -180° liegt, so ergibt sich der Staudruck q ebenfalls durch Multiplikation der Druckdifferenz $p_{56}$ mit dem Beiwert $1/c_{56}$.

Die Tabellen od.dgl., welche den Differenzenquotienten D die jeweiligen Einfallwinkel und des weiteren den Einfallwinkeln bzw. den vorgenannten Differenzenquotienten D die Werte von c für die Beiwerte $1/c$ zuordnen, sind fahrzeugspezifisch und müssen zuvor durch Windkanalversuche od.dgl. ermittelt werden.

Die Anordnung des Referenzraumes 7 ist aus folgenden Gründen wichtig:

Im Referenzraum 7 liegt - zumindest annähernd - Atmosphärendruck vor. Die zwischen rechter und linker Fahrzeugseite auftretenden Druckunterschiede liegen typischerweise bei etwa 10 bis 30 mbar. Da die Drucksonden 1 bis 6 die Druckdifferenz zwischen dem Inneren des Referenzraumes 7 und der Umgebung am Ort der jeweiligen Sonde 1 bis 6 messen, liegt der jeweilige Meßwert im Bereich zwischen etwa -30 mbar und +30 mbar. Dabei ist jeweils ein möglicher Meßfehler von ca. 1 % zu berücksichtigen, welcher jedoch insgesamt deutlich kleiner als der Druckunterschied von rechter und linker Fahrzeugseite ist, so daß mit einer sehr genauen Ermittlung des Einfallwinkels sowie des Staudruckes gerechnet werden kann.

Würden die Sonden 1 bis 6 dagegen jeweils den Absolutwert des Druckes in der Umgebung der Sonden messen, so läge der Istwert jeweils in der Umgebung von ca. 1000 mbar. Ein Meßfehler von 1 % bedeutet dann eine Abweichung des ermittelten vom tatsächlichen Wert in Höhe von etwa 10 mbar. Dieser Meßfehler hat aber bereits gleiche Größenordnung wie die zu ermittelnde Druckdifferenz zwischen rechter und linker Fahrzeugseite, so daß mit äußerst ungenauen Ergebnissen gerechnet werden müßte.

**Patentansprüche**

1. Vorrichtung zur Bestimmung von Seitenwindeinflüssen an Fahrzeugen, insbesondere Kraftfahrzeugen od.dgl., mit mehreren Drucksonden, welche symmetrisch zur vertikalen Mittellängsebene des Fahrzeuges sowie in Längsrichtung desselben voneinander beabstandet angeordnet und mit der Eingangsseite eines die Druckmeßwerte auswertenden Rechners verbunden sind,

dadurch gekennzeichnet,

daß der Rechner (11)

- ein die Windrichtung relativ zum Fahrzeug (10) wiedergebendes Signal (z.B. $D_{1423}$) erzeugt, indem der Quotient aus der Differenz der Signale einer ersten Drucksonde auf der einen Fahrzeugseite und einer zweiten dazu unsymmetrisch angeordneten Drucksonde auf der anderen Fahrzeugseite sowie der Differenz der Signale der zu den beiden vorgenannten Drucksonden symmetrisch angeordneten Drucksonden gebildet wird, und

- ein den Staudruck des Seitenwindes wiedergebendes Signal (q) erzeugt, indem die Differenz der Signale zweier auf unterschiedlichen Fahrzeugseiten unsymmetrisch zueinander angeordneter Drucksonden mit einem vorgegebenen bzw. vorgebbaren, von dem die Windrichtung wiedergebenden Signal abhängigen Faktor multiplikativ verknüpft wird.

2. Vorrichtung nach Anspruch 1, dadurch gekennzeichnet, daß die Drucksonden (1 bis 6) unter der Außenhaut des Fahrzeuges (10) jeweils an einer nach außen führenden Öffnung bzw. Bohrung angeordnet sind.

3. Vorrichtung nach einem der Ansprüche 1 oder 2, dadurch gekennzeichnet, daß die Drucksonden (1 bis 6) - z.B. über Rohr- bzw. Schlauchleitungen od.dgl. - jeweils an einen gemeinsamen Referenzraum (7) angeschlossen sind und Signale ($p_1$ bis $p_6$) erzeugen, die von der Druckdifferenz zwischen der Umgebung der jeweiligen Drucksonde und dem Referenzraum (7) abhängen.

4. Vorrichtung nach Anspruch 3, dadurch gekennzeichnet, daß der Referenzraum (7) über eine Drosselstrecke (9) mit der Atmosphäre verbunden ist.

5. Vorrichtung nach einem der Ansprüche 3 oder 4, dadurch gekennzeichnet, daß ein Karosseriehohlraum als Referenzraum (7) mit den Sonden (1 bis 6) verbunden ist.

6. Vorrichtung nach einem der Ansprüche 1 bis 5, dadurch gekennzeichnet, daß die Signale jeder Sonde (1 bis 6) bei Wind in Längsrichtung des Fahrzeuges betragsmäßig groß und annähernd proportional zum Staudruck (q) des Windes sind und bei gleichbleibender Windgeschwindigkeit - zumindest in einem Winkelbereich der Windrichtungen - deutlich von der Windrichtung abhängen.

7. Vorrichtung nach einem der Ansprüche 1 bis 6, dadurch gekennzeichnet, daß zwei frontseitige Drucksonden (1,2) sowie zwei oder vier seitliche Drucksonden (3,4 bzw. 3 bis 6) angeordnet sind, wobei bevorzugt die einen seitlichen Sonden (3,4) am Vorderbereich und die anderen seitlichen Sonden (5,6) am Mittelbereich des Fahrzeuges angeordnet sind.

8. Vorrichtung nach Anspruch 7, dadurch gekennzeichnet, daß der Rechner (11) die Signale der beiden symmetrisch angeordneten frontseitigen Drucksonden (1,2) sowie zweier symmetrisch angeordneter seitlicher Drucksonden (3,4 oder 5,6) verarbeitet, wenn die Differenz zwischen dem Signal der frontseitigen Drucksonde auf der einen Fahrzeugseite und dem Signal der anderen frontseitigen Drucksonde gleiches Vorzeichen wie die Differenz zwischen dem Signal der einen seitlichen Drucksonde auf der einen Fahrzeugseite und dem Signal der dazu symmetrisch angeordneten seitlichen Drucksonde hat.

9. Vorrichtung nach einem der Ansprüche 1 bis 8, dadurch gekennzeichnet, daß der Rechner (11) in Abhängigkeit von Windrichtung und Staudruck die Lenkung des Fahrzeuges und/oder aerodynamische Hilfsmittel zur Kompensation von Seitenwindeinflüssen steuert.

10. Vorrichtung nach einem der Ansprüche 1 bis 9, dadurch gekennzeichnet, daß die Drucksonden piezo-resistive Drucksonden (1 bis 6) sind.

**Claims**

1. A device for determining the effects of cross winds on vehicles, particularly motor vehicles or the like, comprising a plurality of pressure probes spaced apart from one another in a longitudinal direction of the vehicle and arranged symmetrically with respect to a vertical central plane through the vehicle and connected to the input side of a computer which evaluates the measured pressure values, characterised in that the computer (11)

   - generates a signal (e.g. $D_{1423}$) which reproduces the direction of the wind in relation to the vehicle (10), in that the quotient is obtained from the difference between the signals from a first pressure probe on one side of the vehicle and from, disposed asymmetrically thereof, a second pressure probe on the other side of the vehicle and from the difference between the signals from pressure probes disposed symmetrically in relation to the two aforementioned pressure probes, and

   - generates a signal (q) which reproduces the ram pressure of the cross wind in that the difference between the signals from two pressure probes disposed asymmetrically of each other on different sides of the vehicle is multiplied by a factor dependent on the signal which reproduces the wind direction and which can be or is predetermined.

2. A device according to claim 1, characterised in that the pressure probes (1 to 6) are disposed under the outer skin of the vehicle (10), in each case on an outwardly extending aperture or bore.

3. A devise according to one of claims 1 or 2, characterised in that the pressure probes (1 to 6) are connected in each case to a common reference space (7) - for instance via tube or hose lines or the like - and generate signals ($p_1$ to $p_6$) which are dependent upon the pressure difference between the reference space (7) and the environment around the relevant pressure probe.

4. A device according to claim 3, characterised in that the reference space (7) is connected to the atmosphere via a throttle path (9).

5. A device according to one of claims 3 or 4, characterised in that a bodywork cavity is, as a reference space (7), connected to the probes (1 to 6).

6. A device according to one of claims 1 to 5, characterised in that the signals from each probe (1 to 6) are of considerable magnitude when the wind is in the longitudinal direction of the vehicle and are approximately proportional to the ram pressure (q) of the wind and with constant wind velocity - at least in an angular range of wind directions - depend markedly upon the wind direction.

7. A device according to one of claims 1 to 6, characterised in that two frontally disposed pressure probes (1, 2) and two or four lateral pressure probes (3, 4 or 3 to 6) are provided, preferably one each of the lateral probes (3, 4) being disposed in the forward area while the other lateral probes (5, 6) are disposed in the middle portion of the vehicle.

8. A device according to claim 7, characterised in that the computer (11) processes the signals from the two symmetrically disposed frontal pressure probes (1, 2) and from two symmetrically disposed lateral pressure probes (3, 4 or 5, 6), when the difference between the signal from the frontal pressure probe on one side of the vehicle and the signal from the other frontal pressure probe have the same value sign as the difference between the signal of one lateral pressure probe on one side of the vehicle and the signal of the lateral pressure probe which is disposed symmetrically thereto.

9. A device according to one of claims 1 to 8, characterised in that as a function of the wind direction and ram pressure so the computer (11) controls the steering of the vehicle and/or aerodynamic aids for compensating for the effects of cross winds.

10. A devise according to one of claims 1 to 9, characterised in that the pressure probes are piezo-resistive pressure probes (1 to 6).

**Revendications**

1. Dispositif pour déterminer les effets de vent latéral sur des véhicules, notamment des véhicules automobiles ou analogues, comportant plusieurs sondes de pression, qui sont disposées symétriquement par rapport au plan longitudinal central vertical du véhicule et qui sont espacées l'une de l'autre dans la direction longitudinale de ce dernier, en étant reliées à l'entrée d'un ordinateur d'évaluation des valeurs de mesures d pressions, caractérisé en ce que l'ordinateur (11)
   - produit un signal (p. ex. $D_{1423}$) représentant le sens du vent par rapport au véhicule (10), en établissant le quotient entre d'une part la différence entre les signaux d'une première sonde de pression située d'un côté du véhicule et d'une seconde sonde de pression, disposée asymétriquement par rapport à la première de l'autre côté du véhicule, et d'autre part la différence entre les signaux des sondes de pression qui sont disposées symétriquement par rapport aux deux sondes précitées, et
   - produit un signal (q) représentant la pression dynamique du vent latéral en combinant par multiplication la différence entre les signaux provenant de deux sondes de pression disposées asymétriquement l'une par rapport à l'autre sur des côtés différents du véhicule par un facteur prédéterminé ou prédéterminable, qui est fonction du signal représentant le sens du vent.

2. Dispositif selon la revendication 1, caractérisé en ce que les sondes de pression (1 à 6) sont disposées en dessous du pavillon du véhicule (10) respectivement au niveau d'une ouverture ou un trou débouchant vers l'extérieur.

3. Dispositif selon une des revendications 1 ou 2, caractérisé en ce que les sondes de pression ( 1 à 6) sont respectivement reliées chacune - par exemple par l'intermédiaire de conduits tubulaires ou de flexibles ou analogues - à un volume commun de référence (7) et produisent des signaux ($p_1$ à $p_6$), qui sont fonction de la différence de pression entre l'environnement de la sonde de pression correspondante et le volume de référence (7).

4. Dispositif selon la revendication 3, caractérisé en ce que le volume de référence (7) est relié à l'atmosphère par l'intermédiaire d'un passage d'étranglement (9).

5. Dispositif selon la revendication 3 ou 4, caractérisé en ce que l'habitacle de carrosserie est relié aux sondes (1 à 6) comme volume de référence (7).

6. Dispositif selon une des revendications 1 à 5, caractérisé en ce que les signaux de chaque sonde ( 1 à 6) sont assez grands dans le cas d'un vent orienté dans la direction longitudinale du véhicule et sont approximativement proportionnels à la pression dynamique (q) du vent et, dans le cas d'une vitesse de vent constante - au moins dans un domaine angulaire de directions du vent - ils dépendent sensiblement de la direction du vent.

7. Dispositif selon une des revendications 1 à 6, caractérisé en ce qu'il est prévu deux sondes de pression (1, 2) sur le côté avant et également deux ou quatre sondes de pression latérales (3, 4 ou 3 à 6), auquel cas avantageusement des sondes latérales (3, 4) sont disposées sur la zone avant du véhicule et les autres sondes latérales (5, 6) sur la zone centrale du véhicule.

8. Dispositif selon la revendication 7, caractérisé en ce que l'ordinateur (11) traite les signaux des deux sondes de pression (1, 2) disposées symétriquement sur le côté avant et également de deux sondes de pression (3, 4 ou 5, 6) disposées latéralement symétriquement, lorsque la différence entre le signal de la sonde de pression située à l'avant d'un côté du véhicule et le signal de l'autre sonde de pression située à l'avant a le même signe que la différence entre le signal de la sonde latérale de pression située sur ce côté du véhicule et le signal de la sonde (2) latérale de pression qui est disposée symétriquement.

9. Dispositif selon une des revendications 1 à 8, caractérisé en ce que l'ordinateur (11) commande, en fonction du sens du vent et de la pression dynamique, la direction du véhicule et/ou des moyens auxiliaires aérodynamiques pour une compensation des effets du vent latéral.

10. Dispositif selon une des revendications 1 à 9, caractérisé en ce que les sondes de pression sont des sondes piezo-résistives ( 1 à 6).

FIG. 1

# FIG. 2

FIG. 3

EP 0 341 447 B1